# EUROPÄISCHE PATENTANMELDUNG

(11) **EP 2 338 738 A2**
(43) Veröffentlichungstag der Anmeldung: **29.06.2011**
(21) Anmeldenummer: 10466034.5
(22) Anmeldetag: 16.12.2010
(51) Int. Cl.: B60R 7/02

(54) **Universelles exzentrisches Befestigungsmittel**

(30) Priorität: 17.12.2009 CZ 20090856
(71) Anmelder: Skoda Auto a.s., 293 60 Mladá Boleslav (CZ)
(72) Erfinder: Baloun, Jan, 66471 Veverská Bityska (CZ)

(57) **Zusammenfassung**

Universelle Exzenter-Spannklemme (1), für die Befestigung an der Verzurröse (3) in der Einsenkung (4) der Seitenverkleidung (5) des Laderaumes (2) bestimmt, bestehend aus einem Körper (6), zu dem ein Deckel (18) befestigt ist und weiter aus einer schwenkbar gelagerten Spannbacke (24). Im oberen Teil der Baugruppe ist schwenkbar ein Hebel mit Exzenter (22) gelagert. Der Körper (6) wird durch Seitenwände (7) gebildet, die unten über die Unterlage (9) und oben über den oberen Abstützteil (10) verbunden sind, an dessen unterer Fläche (15) eine obere Aussparung (16) ausgebildet ist. Analog ist an der oberen Fläche (27) der Spannbacke (24) eine untere Aussparung (28) ausgebildet. Nach dem Aufsetzen der universellen Exzenter-Spannklemme (1) auf die Verzurröse (3) und der Verschwenkung des Hebels mit dem Exzenter (22) um ca. 180° wird die Verzurröse (3) in der oberen Aussparung (16) durch die untere Aussparung (28) festgeklemmt und so gegen einen axialen oder radialen Vorschub, sowie gegen Verschwenkung gesichert. So fixierte universelle Exzenter-Spannklemme dient als austauschbarer Bauteil der einzelnen Ausstattungen des Laderaumes (2), zu denen er wahlweise angeschraubt werden kann.

## Beschreibung

### Technisches Gebiet

Die Erfindung betrifft eine Exzenter-Spannklemme zur Befestigung von Gegenständen, insbesondere der Gegenstände im Laderaum von Kraftfahrzeugen.

### Bisheriger Stand der Technik

Derzeit werden zur Befestigung oder Sicherung von Gegenständen im Laderaum des Kraftfahrzeuges verschiedene, dem Charakter der transportierten Gegenstände entsprechende Methoden verwendet. Bekannt sind verschiedene Arten von Raum-Organizer, bestehend aus festen oder verstellbaren Trenneinsätzen, die zur Sicherung von Kleingegenständen, Einkaufstaschen usw. dienen. Zum ähnlichen Zweck dienen auch verschiedene Arten von festen oder klappbaren Haken, die seitlich im Laderaum oder hinter den Hintersitzen angeordnet sind, auf die man Taschen mit transportierten Gegenständen aufhängen kann, wie aus der Patentschrift CZ 293138 B6 zu entnehmen ist.

Aus der Patentanmeldung EP 0939005 A1 ist die Verwendung von Längsführungsschienen bekannt, in denen sich ein Querträger bewegt, der zur Befestigung z.B. vom Fahrrad dient. Weitere Methode der Fixierung ist die Verwendung von Verzurrösen, die am Boden oder an den Seiten des Laderaumes angeordnet sind. Zu diesen Ösen können mit Karabinerhaken Gurte eingeklinkt werden, entweder feste oder elastische, die zur Sicherung des Ladeguts dienen. Eine Alternative zu den Gurten können verschiedene Netze mit gleicher Funktion sein. Zur Befestigung der transportierten Gegenstände mit den Verzurrösen werden auch Einzweckklemmen verwendet, die immer deren untrennbarer Bestandteil sind - z.B. eine Stange des Fahrradhalters, der Stoßstift der Seitenwand des erhöhten Ladebodens usw. Nachteil der Einzweckklemmen ist jedoch die geringere Stufe derer Universalität, wie auch nicht immer einfache Bedienung, wo sich die Besatzung die Bedienung jeder einzelnen Klemme aneignen muss. Unvernachlässigbare Rolle spielt hier auch die finanzielle Seite der Sache, da die geringere Stufe der Universalität der Klemmen ihre Herstellkosten erhöht.

### Darstellung der Erfindung

Die Aufgabe wird durch eine universelle Exzenter-Spannklemme gelöst, die für die Befestigung an der Verzurröse in der Einsenkung der Seitenverkleidung des Laderaumes bestimmt ist und aus einem Körper mit befestigtem Deckel und einer Spannbacke besteht, wobei den Körper die zwei unten über die Unterlage und oben über den oberen Abstützteil miteinander verbundene Seitenwände bilden und wo an der unteren Fläche des Abstützteils die obere Aussparung ausgebildet ist und die drehbar gelagerte Spannbacke an der oberen Fläche eine untere Aussparung aufweist, wobei in der befestigten Position der universellen Exzenter-Spannklemme sich zwischen der oberen Aussparung und der unteren Aussparung die Verzurröse befindet. Damit die universelle Exzenter-Spannklemme auf die Verzurröse aufgesetzt werden kann, weist die Spannbacke Bolzen auf, an denen sie schwenkbar in den Öffnungen gelagert ist, die durch die Aussparungen in den Seitenwänden und die halbrunden Einfassungen am Deckel ausgestaltet sind. Die Spannbacke weist ferner einen Ausläufer auf. Der Deckel, der ein senkrechtes Loch mit verschiebbar gelagertem Stift aufweist, hat einen oberen Steg mit einem Loch, das koaxial mit dem Loch im oberen Steg des Abstützteils des Körpers verläuft, wobei in den Löchern schwenkbar ein Hebel mit Exzenter angeordnet ist, der eine Fläche des Exzenters aufweist. Der Deckel weist mindestens ein Fixierungsloch mit Gewinde auf.

### Übersicht der Figuren der Zeichnungen

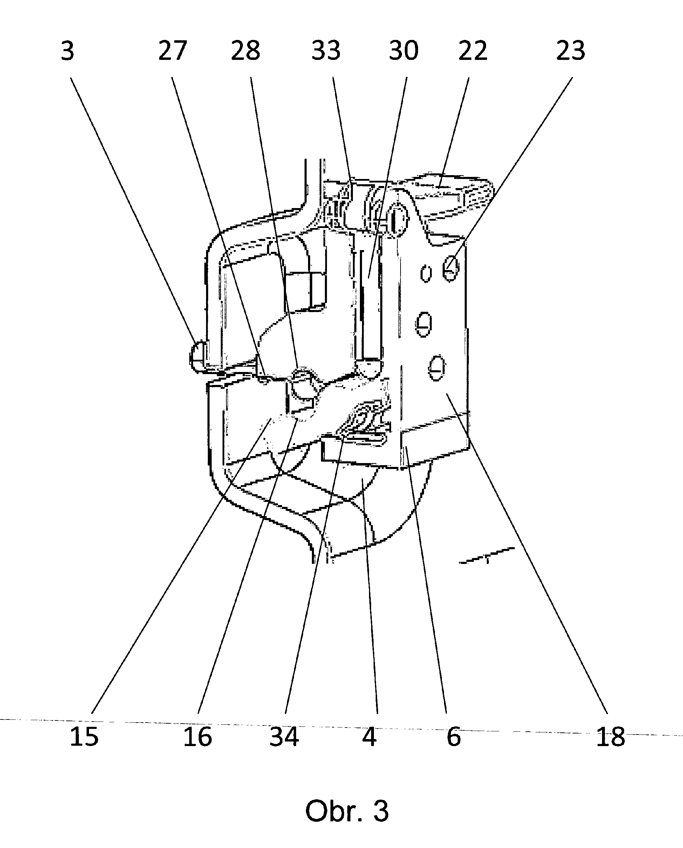

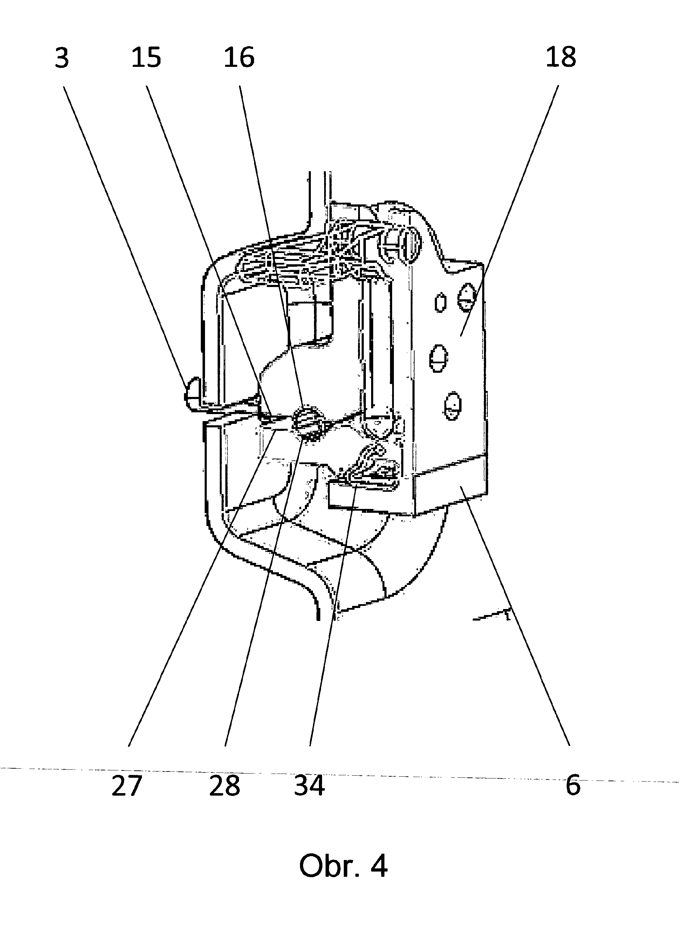

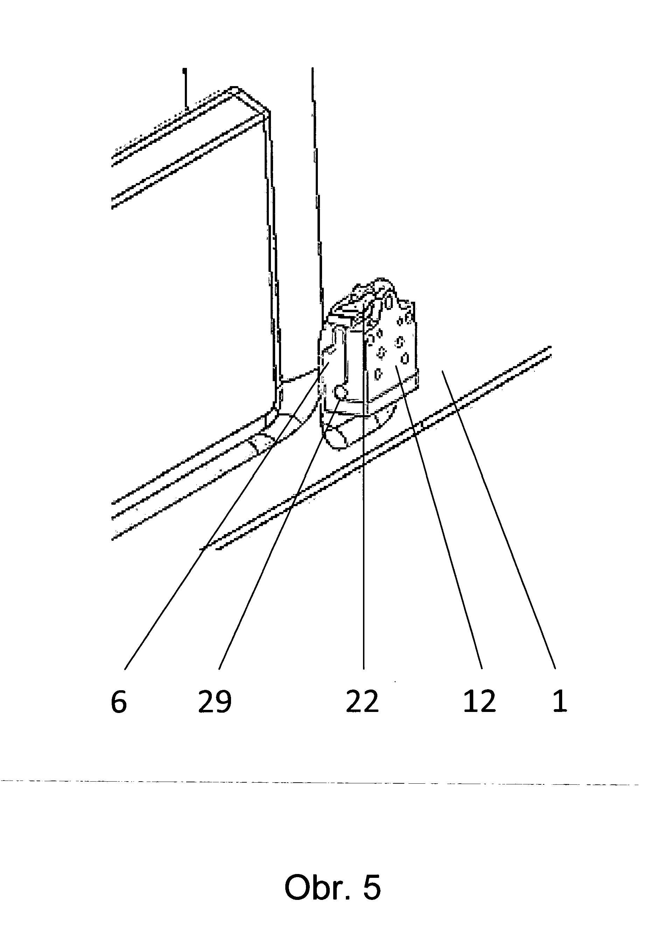

Die Erfindung wird näher anhand der Ausführungsbeispiele gemäß den beigefügten Zeichnungen erläutert, in denen die Fig. 1 eine Axonometrieansicht des Laderaumes, die Fig. 2 die einzelnen Teile der universellen Exzenter-Spannklemme in einer Axonometrieansicht, die Fig. 3 die auf der Verzurröse aufgesetzte universelle Exzenter-Spannklemme in entriegelter Stellung im Schnitt, die Fig. 4 die auf der Verzurröse aufgesetzte universelle Exzenter-Spannklemme in verriegelter Stellung im Schnitt, die Fig. 5 die universelle Exzenter-Spannklamme in Axonometrieansicht im befestigten Zustand darstellt.

### Ausführungsbeispiel der Erfindung

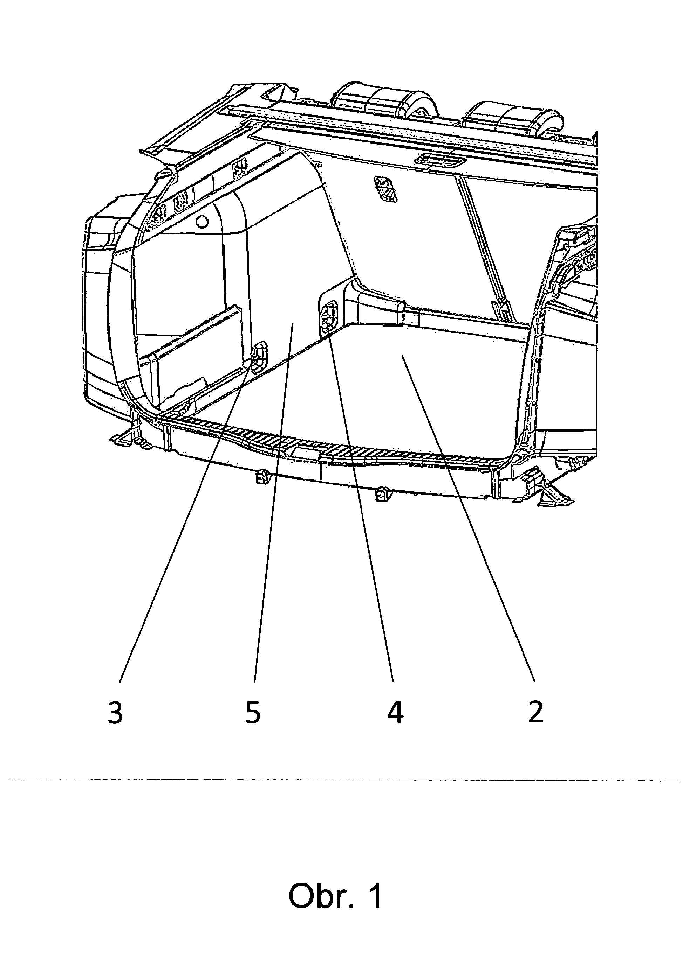

Wie aus der Fig. 1 hervorgeht, ist die universelle Exzenter-Spannklemme 1 zur Befestigung an den Verzurrösen 3 bestimmt, die fest mit dem Seitenteil der Fahrzeugkarosserie (nicht abgebildet) verbunden und in Einsenkungen 4 der Seitenverkleidungen 5 des Laderaumes 2 angeordnet sind. Sowohl die Verzurrösen 3, wie auch die Einsenkungen 4, weisen typisierte Abmessungen auf.

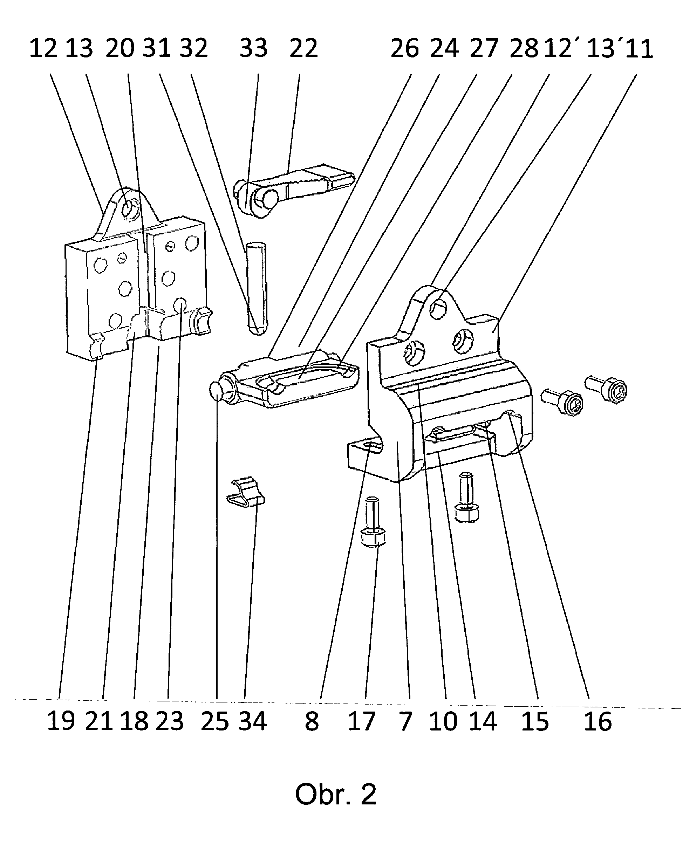

Wie in der Fig. 2 dargestellt, besteht die universelle Exzenter-Spannklemme 1 aus einem Körper 6, zu dem ein Deckel 18 befestigt ist, wobei der Körper 1 aus einem Paar der Seitenwände 7 in Form der Buchstabe C mit Aussparung 8 besteht, unten mit der Unterlage 9 und oben durch den oberen Abstützteil 10 verbunden, der in den oberen Steg 11 mit Öse 12 übergeht, in der eine Öffnung 13 ausgebildet ist. Zwischen den Seitenwänden 7, der Unterlage 9 und dem oberen Abstützteil 10 ist ein Langloch 14 ausgebildet. An der unteren Fläche 15 des oberen Abstützteils 10 ist eine obere Aussparung 16 ausgebildet. An dem Körper 6 ist mit Schrauben 17 ein Deckel 18 befestigt, der im unteren Teil ein Paar von halbrunden Einfassungen 19 aufweist. Der Deckel 18 weist weiter eine senkrechte Rille 20 und Deckelaussparung 21 auf. Im oberen Teil ist die Öse 12' mit dem Loch 13' angeordnet, wobei die Löcher 12 und 12' im zusammengebauten Zustand des Körpers 6 und des Deckels 18 koaxial sind und einen schwenkbar gelagerten Hebel mit Exzenter 22 enthalten. Der Deckel 18 weist die Fixierungslöcher 23 mit Gewinde auf.

Weiterer Bestandteil der universellen Exzenter-Spannklemme 1 ist die Spannbacke 24, die ein Paar von Bolzen 25 und einen Ausläufer 26 aufweist. An der oberen Fläche 27 der Spannbacke 24 ist eine untere Aussparung 28 ausgebildet. Im zusammengebauten Zustand des Körpers 6 und des Deckels 18 liegen die halbrunden Einfassungen 19 des Deckels 18 an die Aussparungen 8 in den Seitenwänden 7 an, wodurch ein Paar seitlicher Löcher 29 gebildet wird. In denen ist die Spannbacke 24 gelagert, die teilweise in dem durch das Langloch 14 eingegrenzten Raum, in dem sie sich befindet, um die Bolzen 25 schwenkbar ist. In der senkrechten Rille 20 des Deckels 18 befindet sich ein Stift 30, der mit dem unteren Ende 31 an den Ausläufer 26 anliegt und an dessen oberes Ende 32 die Fläche des Exzenters 33 aufsetzt.

Zwischen der Unterlage 9 des Körpers 6 und dem Ausläufer 26 der Spannbacke 24 ist eine Flachfeder 34 angeordnet.

Wie bereits oben angeführt, wird die universelle Exzenter-Spannklemme 1 an die Verzurrösen 3 befestigt, die in den Einsenkungen 4 der Seitenverkleidungen 5 des Laderaumes 2 angeordnet sind. In diesem Fall ist der Hebel mit Exzenter 22 in solcher Stellung, dass die Fläche des Exzenters 33 nicht auf das obere Ende 32 des Stiftes 30 drückt. Die Spannbacke 24, eventuell ihre obere Fläche 27, wird also durch die Flachfeder 34 von der unteren Fläche 15 des oberen Abstützteils 10 weggedrückt, wodurch ein einfaches Aufsetzen der universellen Exzenter-Spannklemme 1 über das Langloch 14 auf die Verzurröse 3 ermöglicht wird. Nach dem Aufsetzen des Körpers 6 der universellen Exzenter-Spannklemme 1 in die Einsenkung 4 der Seitenverkleidung 5 des Laderaumes 2 wird der Hebel mit Exzenter 22 um ca. 180° verschwenkt, infolge dessen die Fläche des Exzenters 33 den Stift 30 wegdrückt und seine Schubbewegung über den Ausläufer 26 auf die Spannbacke 24 übertragen wird, wodurch die Verzurröse 3, die in der oberen Aussparung 16 durch die untere Aussparung 28 fixiert ist, festgeklemmt wird. Die Stellung der so festgeklemmten universellen Exzenter-Spannklemme 1 ist also gegenüber der Verzurröse 3 eindeutig abgegrenzt - sie kann sich an der Verzurröse 3 sowohl radial, wie auch axial nicht bewegen und nicht mal um diese verschwenken.

So angeordnete universelle Exzenter-Spannklemme 1 wird als austauschbarer Bauteil eingesetzt, in dem dieser unter Verwendung der Fixierungslöcher 23 mit Gewinde zu dem zu befestigenden Gegenstand befestigt wird.

Beim Bedarf entsprechend dem Charakter des zu befestigenden Gegenstandes kann man bei der Zusammensetzung des Körpers 6 mit dem Deckel 17 die Ausrichtung der Lagerung des Exzenter-Hebels 22 verändern, wodurch die Richtung seines Anziehens geändert werden kann.

### Bezugszeichenliste

- 1: Universelle Exzenter-Spannklemme
- 2: Laderaum
- 3: Verzurröse
- 4: Einsenkung
- 5: Seitenverkleidung
- 6: Körper
- 7: Seitenwände
- 8: Aussparung
- 9: Unterlage
- 10: oberer Abstützteil
- 11: oberer Steg
- 12: Öse
- 13: Loch
- 14: Langloch
- 15: untere Fläche
- 16: obere Aussparung
- 17: Schraube
- 18: Deckel
- 19: halbrunde Einfassung
- 20: vertikale Rille
- 21: Aussparung des Deckels
- 22: Hebel mit Exzenter
- 23: Fixierungsloch
- 24: Spannbacke
- 25: Bolzen
- 26: Ausläufer
- 27: obere Fläche
- 28: untere Aussparung
- 29: Seitenloch
- 30: Stift
- 31: unteres Ende
- 32: oberes Ende
- 33: Exzenterfläche
- 34: Flachfeder

## Patentansprüche

1. Universelle Exzenter-Spannklemme (1) zur Befestigung an die Verzurröse (3) in der Einsenkung (4) der Seitenverkleidung (5) des Laderaumes (2), bestehend aus einem Körper (6), zu dem ein Deckel befestigt ist, (18) und weiter aus einer Spannbacke (24), **dadurch gekennzeichnet, dass** der Körper (6) durch zwei Seitenwände (7) gebildet wird, die unten über die Unterlage (9) und oben über den oberen Abstützteil (10) verbunden sind, dessen Unterseite (15) eine obere Aussparung (16) aufweist und dass die schwenkbar gelagerte Spannbacke (24) an der oberen Fläche (27) eine untere Aussparung (28) ausgebildet hat, wobei in der befestigten Position der universellen Exzenter-Spannklemme (1) zwischen der oberen Aussparung (16) und der unteren Aussparung (28) sich die Verzurröse (3) befindet.

2. Universelle Exzenter-Spannklemme nach Anspruch 1 **dadurch gekennzeichnet, dass** die Spannbacke (24) die Bolzen (25) aufweist, an denen sie schwenkbar in den Seitenlöcher (29) gelagert ist, die durch die Aussparungen (8) in den Seitenwänden (7) und die halbrunde Einfassungen (19) am Deckel (18) gebildet werden, und dass die Spannbacke (24) einen Ausläufer (26) aufweist.

3. Universelle Exzenter-Spannklemme nach Anspruch 1 **dadurch gekennzeichnet, dass** der Deckel (18) einen oberen Steg (11) mit Öse (12) umfasst und eine vertikale Rille (20) aufweist, in der verschiebbar der Stift (30) gelagert ist.

4. Universelle Exzenter-Spannklemme (1) nach Anspruch 1 **dadurch gekennzeichnet, dass** der obere Abstützteil (10) des Körpers (6) in den oberen Steg (11') mit Öse (12') übergeht.

5. Universelle Exzenter-Spannklemme (1) nach Anspruch 1 **dadurch gekennzeichnet, dass** in den Ösen (11, 11') schwenkbar ein Hebel mit Exzenter (22) gelagert ist.

6. Universelle Exzenter-Spannklemme (1) nach Anspruch 1 **dadurch gekennzeichnet, dass** der Exzenter-Hebel (22) eine Fläche des Exzenters (33) aufweist.

7. Universelle Exzenter-Spannklemme (1) nach Anspruch 1 **dadurch gekennzeichnet, dass** der Deckel (18) mindestens ein Fixierungsloch (23) mit Gewinde aufweist.
